# FASCICULE DE BREVET EUROPEEN

(11) **EP 2 721 623 B1**
(45) Date de publication et mention de la délivrance du brevet: **05.08.2015**
(21) Numéro de dépôt: 12728092.3
(22) Date de dépôt: 19.06.2012
(51) Int. Cl.: H01G 11/58, H01G 11/62, H01M 10/0567, H01M 10/0569, H01M 10/0568

(54) **COMPOSITION ÉLECTROLYTIQUE SPÉCIFIQUE POUR DISPOSITIF À STOCKAGE D'ÉNERGIE**
SPEZIFISCHE ELEKTROLYTZUSAMMENSETZUNG FÜR EINE ENERGIESPEICHERVORRICHTUNG
SPECIFIC ELECTROLYTIC COMPOSITION FOR ENERGY STORAGE DEVICE

(30) Priorité: 20.06.2011 FR 1155399
(43) Date de publication de la demande: 23.04.2014
(73) Titulaire: Commissariat à l'Énergie Atomique et aux Énergies Alternatives, 75015 Paris (FR); Université François Rabelais de Tours, 37041 Tours Cedex 1 (FR)
(72) Inventeur: GALIANO, Hervé, F-37700 La Ville Aux Dames (FR); MONTIGNY, Bénédicte, F-37520 La Riche (FR); ABDALLAH, Thamra, F-38130 Echirolles (FR); LEMORDANT, Daniel, F-37270 Veretz (FR)
(74) Mandataire: Ahner, Philippe
(86) Numéro de dépôt international: PCT/EP2012/061735
(87) Numéro de publication internationale: WO 2012/175509

(56) Documents cités:
- EP-A1- 1 786 007
- WO-A1-2007/058422
- WO-A2-2008/009975
- KR-B1- 100 706 715
- US-A1- 2004 131 933
- US-A1- 2004 137 324
- US-A1- 2007 275 305
- US-A1- 2010 310 933
- US-B1- 6 535 373

## Description

### DOMAINE TECHNIQUE

La présente invention a trait à de nouvelles compositions électrolytiques à base de solvant organique comprenant une association originale d'ingrédients.

Ces nouvelles compositions électrolytiques présentent d'excellentes propriétés en termes de conductivité ionique, de largeur de fenêtre électrochimique et de sécurité.

Ainsi, ces compositions électrolytiques peuvent trouver application dans la conception de dispositifs à stockage d'énergie, tels que des supercondensateurs.

### ÉTAT DE LA TECHNIQUE ANTÉRIEURE

Les supercondensateurs (également dénommés supercapacités) constituent des dispositifs à stockage d'énergie permettant d'obtenir une densité de puissance et une densité d'énergie intermédiaires entre celles obtenues pour des batteries électrochimiques et des condensateurs électrolytiques classiques et présentent également pour particularité de permettre de restituer plus rapidement de l'énergie que n'est apte à le faire une batterie électrochimique.

Ainsi, les supercondensateurs présentent un intérêt tout particulier tant pour le domaine de l'énergie embarquée que de celui de l'énergie portable.

D'un point de vue du fonctionnement, les supercondensateurs fonctionnent sur le principe de la double couche électrochimique d'où l'appellation anglo-saxonne parfois rencontrée de « Electrochemical double layer capacitor » (connue également sous l'abréviation EDLC), soit en d'autres termes sur le principe de stockage d'énergie par distribution des ions provenant d'un électrolyte au voisinage de la surface de deux électrodes poreuses (généralement à base de charbon actif) imprégnées d'électrolyte, séparées par une membrane isolante et poreuse assurant la conduction ionique.

Ainsi, une cellule de base d'un supercondensateur peut se résumer aux éléments suivantes :
- une électrode positive ;
- une interface électrode positive/électrolyte formant une double couche électrochimique ;
- une membrane isolante et poreuse imprégnée par ledit électrolyte ;
- une électrode négative ; et
- une interface électrode négative/électrolyte formant une double couche électrochimique.

Du fait de l'existence de ces deux interfaces formant chacune une double couche électrochimique, un supercondensateur peut être considéré schématiquement comme l'association en série de deux condensateurs, l'un à l'électrode positive et l'autre à l'électrode négative, ces deux condensateurs étant créés par application d'un courant aux bornes du supercondensateur, ce qui crée une zone de charges d'espace aux deux interfaces électrode-électrolyte, l'énergie étant ainsi stockée de façon électrostatique et non électrochimique.

Il est connu que l'énergie stockée et la puissance délivrée par un supercondensateur sont fonction du carré de la tension nominale applicable, ce qui signifie, en d'autres termes, que les performances d'un supercondensateur peuvent être grandement améliorées en jouant sur l'augmentation de la tension nominale applicable aux bornes du supercondensateur. Pour ce faire, il est nécessaire toutefois que l'électrolyte présente une grande fenêtre de stabilité électrochimique.

Deux types d'électrolytes ont été, jusqu'à présent, envisagés : les électrolytes aqueux et les électrolytes organiques.

Concernant les électrolytes aqueux, qu'ils soient acides (par exemple, une solution d'acide sulfurique) ou basiques (par exemple, une solution de potasse), le domaine de tension nominale applicable est limité à environ 1 V, ce qui nécessite pour atteindre des tensions classiques (par exemple, 12 V) de procéder à des agencements complexes de plusieurs unités de supercondensateur.

Concernant les électrolytes organiques, consistant classiquement en un solvant organique, dans lequel sont dissous des sels ioniques, ils présentent une fenêtre de stabilité électrochimique plus grande que les électrolytes aqueux. Un solvant organique couramment utilisé est l'acétonitrile. Ce solvant est peu visqueux, dissout très bien les sels et est très dissociant.

De plus :
- il est très stable, tant dans des conditions oxydantes que réductrices ;
- il a un moment dipolaire, qui permet la solvatation des ions ;
- il présente à la fois un nombre donneur élevé et un nombre accepteur élevé, ce qui fait qu'il peut se comporter à la fois comme un acide et une base de Lewis.

Toutefois, en dépit de tous ses avantages, il présente un inconvénient majeur, qui est sa volatilité et son inflammabilité à l'origine d'émanation de vapeurs toxiques, qui rendent difficiles son utilisation à des températures au-delà de 60°C, et ce qui fait qu'il est notamment interdit d'utilisation dans certains pays.

Toutefois, malgré son caractère inflammable, l'acétonitrile reste toutefois un candidat idéal pour entrer dans la constitution des électrolytes, notamment des électrolytes pour superconsendateur.

Les auteurs de la présente invention ont axé leur recherche de sorte à pouvoir maintenir l'utilisation de tous types de solvants organiques dans des électrolytes comprenant des sels ioniques dissous dans lesdits solvants organiques, tout en diminuant le caractère inflammable de ceux-ci, de sorte à pouvoir les utiliser dans des conditions de températures élevées, en particulier dans des dispositifs à stockage d'énergie du type supercondensateur.

### EXPOSÉ DE L'INVENTION

Les auteurs de la présente invention ont découvert, de manière surprenante, qu'en associant à un électrolyte organique (c'est-à-dire un électrolyte comprenant au moins un solvant organique dans lequel sont dissous des sels ioniques) un adjuvant particulier, il est possible de diminuer, de façon conséquente, le caractère inflammable du solvant organique et ainsi de la composition le contenant.

Cette invention a trait, ainsi, en premier lieu, à une composition électrolytique comprenant au moins un solvant organique, dans lequel est (sont) dissous un ou plusieurs sels ioniques non lithiés, caractérisée en qu'il est ajouté à cette composition électrolytique un liquide ionique, lequel liquide ionique permet d'augmenter la température d'inflammabilité de ladite composition.

On précise que, par liquide ionique, on entend des sels se présentant à l'état liquide, ces liquides ioniques pouvant être représentés par la formule générale suivante :

A⁺X⁻

dans laquelle :
*A⁺ représente un cation, généralement, organique ; et
*X⁻ représente un anion, généralement, inorganique.

Par sel ionique non lithié, on entend, au sens de l'invention, un sel ne comprenant pas comme cation des ions lithium, ce sel étant dissous dans le solvant organique de la composition électrolytique.

L'ajout d'un liquide ionique à une composition électrolytique du type sel ionique dissous dans un solvant organique confère aux compositions résultantes les avantages suivants :
- une limite d'inflammabilité plus élevée pour le solvant organique, ce qui permet d'utiliser ces compositions électrolytiques dans des conditions de températures plus élevées que pour les compositions électrolytiques ne comportant pas de liquide ionique ;
- une conductivité de la composition plus élevée ;
- une fenêtre électrochimique plus large que celle obtenue pour des compositions électrolytiques analogues ne comportant pas de liquide ionique.

Le solvant organique est classiquement un solvant organique aprotique et peut être choisi, en particulier, parmi les solvants nitriles (c'est-à-dire les solvants comprenant au moins un groupe -CN), les solvants carbonates et les solvants lactones (c'est-à-dire les solvants comprenant au moins un groupe ester cyclique).

Lorsque le solvant est un solvant nitrile, il peut s'agir de l'acétonitrile de formule CH₃-CN.

L'acétonitrile est particulièrement avantageux et ce pour les raison suivantes :
- il est peu visqueux (sa viscosité étant de l'ordre de 0,32 mPa.s) ;
- il dissout très bien les sels, car il est très dissociant, ce qui rend les électrolytes comprenant de l'acétonitrile conducteurs à froid ;
- il est stable d'un point de vue électrochimique, tant dans des conditions oxydantes que réductrices ;
- il présente un moment dipolaire qui permet la solvatation des ions ;
- il présente un nombre donneur de Guttman élevé (de l'ordre de 14) et un nombre accepteur de Guttman également élevé (de l'ordre de 19), ce qui fait qu'il peut se comporter à la fois comme un accepteur et comme un donneur d'électrons.

Lorsque le solvant est un solvant carbonate, il peut s'agir du carbonate de propylène, du carbonate d'éthylène, du carbonate de diméthyle, de l'éthylméthylcarbonate (ou carbonate éthylique méthylique connu sous la dénomination « EMC »).

Lorsque le solvant est un solvant lactone, il peut s'agir de la γ-butyrolactone, de la β-butyrolactone, de la γ-valérolactone, de la δ-valérolactone et de la γ-caprolactone.

S'agissant du liquide ionique, le cation peut être un composé comportant au moins un atome d'azote, dont la charge positive est portée par ledit atome d'azote, cet atome d'azote pouvant appartenir à une chaîne hydrocarbonée linéaire ou ramifiée ou à un cycle hydrocarboné.

Lorsque l'atome d'azote chargé appartient à une chaîne hydrocarbonée linéaire ou ramifiée, le cation peut répondre à la formule générale suivante : 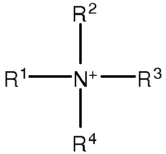 dans laquelle R¹, R², R³ et R⁴ représentent un groupe alkyle comprenant de 1 à 12 atomes de carbone.

Des exemples spécifiques de tels cations peuvent être le N-triméthyl-N-propylammonium, le N-hexyl-N-triméthylammonium, le N-éthyl-N-diméthyl-N-propylammonium, le N-méthyl-N-trioctylammonium.

Lorsque l'atome d'azote chargé appartient à un cycle hydrocarboné, le cation peut répondre à l'un des formules (II) et (III) suivantes : 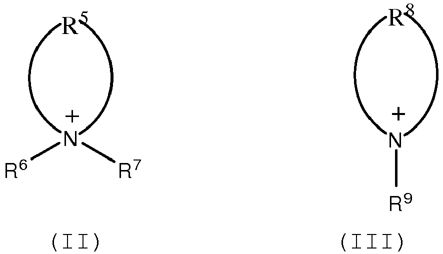 dans lesquelles :
- N⁺ et R⁵ forment ensemble un groupe alicyclique ;
- N⁺ et R⁸ forment ensemble un groupe aromatique ;
- R⁶, R⁷ et R⁹ représentent, indépendamment, un groupe alkyle comprenant de 1 à 12 atomes de carbone.

Des exemples de cations de formule (II) peuvent être :
*des cations pipéridinium, tels que le cation de formule suivante : 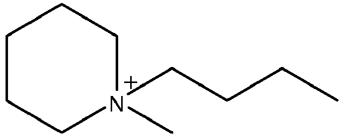 également nommé N-butyl-N-méthylpipéridinium ;
*des cations pyrrolidinium, tels que le cation de formule suivante : 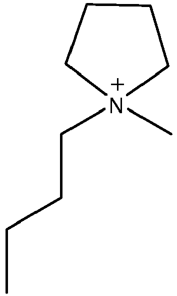 également nommé N-butyl-N-méthylpyrrolidinium.

Des exemples spécifiques de cations de formule (III) peuvent être :
*des cations imidazolium, tels que le cation de formule suivante : 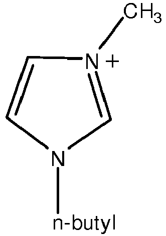 également nommé le 1-n-butyl-3-méthylimidazolium ;
*des cations pyridinium, tels que le cation de formule suivante : 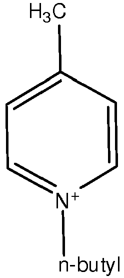 également nommé le 1-n-butyl-4-méthylpyridinium.

S'agissant du liquide ionique, l'anion peut être un composé comprenant un hétéroatome porteur d'une charge négative, cet hétéroatome pouvant choisi parmi un atome d'azote ou un atome de bore.

Il peut s'agir d'un composé amidure perfluoré, tel qu'un composé bis(trifluorométhyl-sulfonyl)amidure (pouvant être également nommé « bis(trifluorométhanesulfonyl)imide ») de formule suivante : 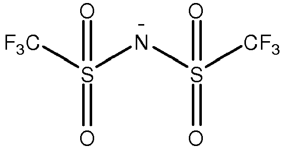 ou encore d'un composé borate perfluoré, tel qu'un composé tétrafluoroborate de formule suivante :

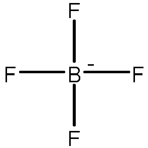

Des liquides ioniques utilisables dans les compositions de l'invention peuvent être :
*le N-triméthyl-N-propylammonium bis(trifluométhanesulfonyl)imide répondant à la formule suivante : 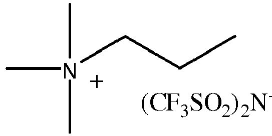
*le N-butyl-N-méthylpipéridinium bis(trifluorométhanesulfonyl)imide répondant à la formule suivante : 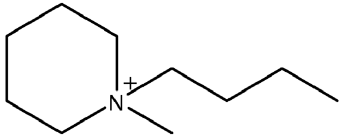 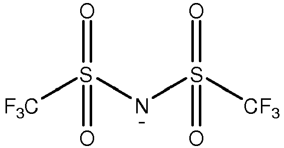
*le N-butyl-N-méthylpyrrolidinium bis(trifluométhanesulfonyl)imide répondant à la formule suivante : 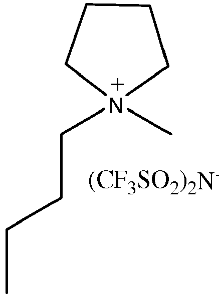
*le 1-n-butyl-3-méthylimidazolium tétrafluoroborate répondant à la formule suivante : 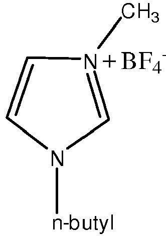
*le 1-n-butyl-4-méthylpyridinium tétrafluoroborate répondant à la formule suivante :

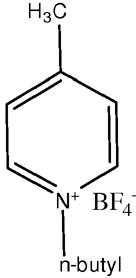

S'agissant du sel ionique, il peut s'agir d'un sel d'ammonium, tel que le tétraéthylammonium tétrafluoroborate.

L'homme du métier choisira ainsi de façon appropriée les proportions respectives des différents ingrédients constitutifs des compositions de l'invention, de sorte à obtenir une bonne conductivité intrinsèque et également à conférer à la composition un caractère ininflammable, ce qui permettra d'envisager l'utilisation de ces compositions dans des dispositifs à stockage d'énergie, en particulier dans des supercondensateurs.

A titre indicatif, la teneur en sel ionique de la composition peut aller de 0,25 mol/L à 2 mol/L et la teneur en liquide ionique de la composition peut aller de 10% à 20% massique.

Les compositions de l'invention peuvent être préparées par des procédés de préparation simples à la portée de l'homme du métier.

Ainsi, les compositions peuvent être préparées selon la séquence d'étapes suivantes :
- une étape de pesée de chacun des ingrédients, à savoir du solvant organique, du liquide ionique et du sel ionique ;
- une étape de formation de la composition par ajout du liquide ionique dans le solvant organique, suivi de l'ajout du sel ionique.

Les compositions de l'invention forment un mélange électrolytique, dont la conductivité intrinsèque résulte à la fois de la présence d'un sel ionique et d'un liquide ionique, le liquide ionique augmentant, de plus, la limite d'inflammabilité du solvant organique compris dans les compositions de l'invention. La présence du solvant organique contribue aussi à rendre le liquide ionique moins visqueux et ainsi plus à même d'imprégner une pièce poreuse, telle qu'une électrode poreuse.

Ainsi, les compositions de l'invention sont particulièrement appropriées pour être utilisées comme électrolytes dans un dispositif à stockage d'énergie, de préférence, du type supercondensateur.

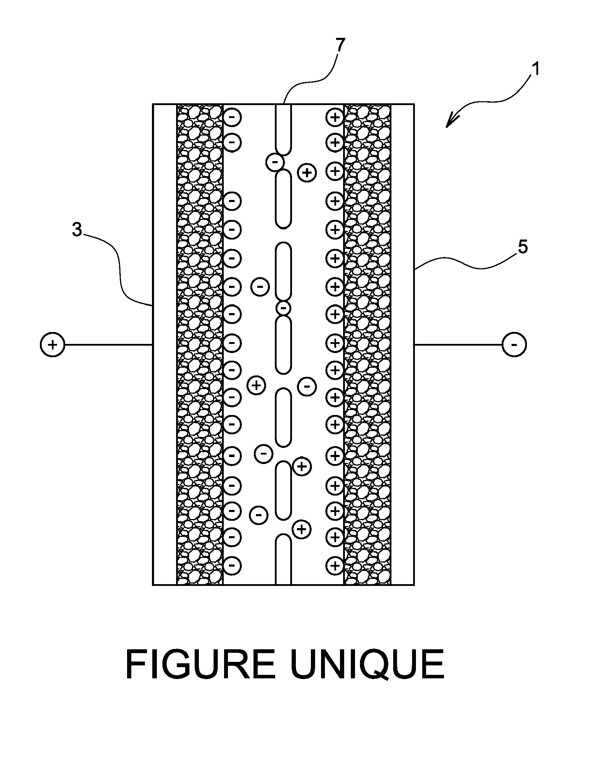

L'invention a donc trait également à un dispositif à stockage d'énergie, par exemple, du type supercondensateur, comme illustré selon un mode de réalisation particulier sur la figure unique jointe en annexe, comprenant au moins une cellule 1 comprenant une électrode positive 3 et une électrode négative 5 séparées l'une de l'autre par un séparateur 7 comprenant une composition électrolytique conforme à l'invention.

L'électrode positive et l'électrode négative peuvent être à base de carbone activé, auquel cas les supercondensateurs comprenant ce type d'électrodes peuvent être qualifiés de système symétriques.

L'électrode positive et l'électrode négative peuvent être également à base d'oxyde(s) métallique(s).

La composition électrolytique forme au niveau de chaque interface électrode-électrolyte une double couche électrochimique.

En particulier, une composition électrolytique particulièrement intéressante en vue d'une utilisation dans des supercondensateurs est une composition électrolytique, dans laquelle le solvant organique est l'acétonitrile, ce qui procure les avantages suivantes :
- la tension de vapeur de l'acétonitrile est abaissée, de façon substantielle, du fait de la présence d'un liquide ionique et de la formation de solvates stables avec les ions de ce liquide ionique (notamment lorsque le cation est un cation pyridinium), ce qui a pour conséquence de réduire l'inflammabilité de l'acétonitrile et ainsi du mélange contenant de l'acétonitrile ;
- la fenêtre électrochimique est très large (au moins 3,5 V), la présence du liquide ionique contribuant à élargir cette fenêtre électrochimique de 1"acétonitrile ;
- les compositions électrochimiques ne cristallisent pas à froid et il est possible de dépasser largement la température d'ébullition de l'acétonitrile sans qu'il n'y ait de phénomène substantiel de vaporisation.

En d' autres termes, l'invention a trait à l'utilisation d'un liquide ionique dans une composition électrolytique comprenant un solvant organique et un sel ionique non lithié dissous dans ledit solvant organique pour augmenter la température d'inflammabilité de ladite composition (sous-entendu, par rapport à une composition comprenant le même solvant organique et le même sel ionique non lithié dissous mais ne comprenant pas ledit liquide ionique).

Le liquide ionique, le solvant organique et le sel ionique non lithié répondent aux mêmes spécificités que celles décrites pour les compositions électrolytiques définies ci-dessus.

L'invention va à présente être décrite en référence à l'exemple fourni ci-dessous à titre illustratif et non limitatif.

### BRÈVE DESCRIPTION DES DESSINS

La figure unique représente une cellule de supercondensateur mettant en oeuvre une composition électrolytique conforme à l'invention.

### EXPOSÉ DÉTAILLÉ DE MODES DE RÉALISATION PARTICULIERS

### EXEMPLE

Les compositions testées dans cet exemple consistent en un mélange ternaire comprenant :
- un solvant organique ;
- un sel ionique : Et₄NBF₄ ; et
- un liquide ionique.

Les liquides ioniques testés, dans le cadre de cet exemple, sont les suivantes :
*la N-triméthyl-N-propylammonium bis(trifluométhanesulfonyl)imide (symbolisé par l'abréviation PTMA-TFSI) répondant à la formule suivante : 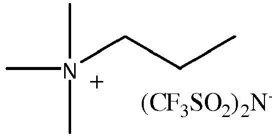
*la N-butyl-N-méthylpipéridinium bis(trifluorométhanesulfonyl)imide (symbolisé par l'abréviation Pip14-TFSI) répondant à la formule suivante : 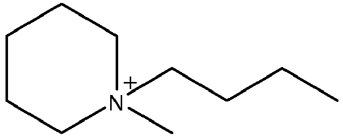 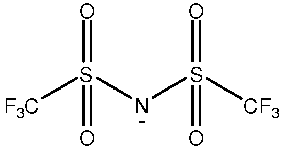
*la N-butyl-N-méthylpyrrolidinium bis(trifluométhanesulfonyl)imide (symbolisé par l'abréviation P14-TFSI) répondant à la formule suivante : 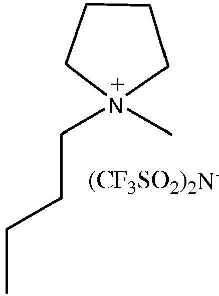
*le 1-n-butyl-3-méthylimidazolium tétrafluoroborate (symbolisé par l'abréviation BMIM-BF4) répondant à la formule suivante : 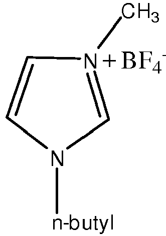
*le 1-n-butyl-4-méthylpyridinium tétrafluoroborate (symbolisé par l'abréviation PyBF₄) répondant à la formule suivante :

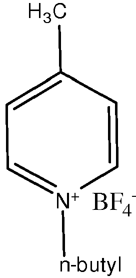

Les solvants utilisés sont l'acétonitrile et la γ-butyrolactone.

Les compositions sont soumises à un test d'inflammabilité en soumettant une bandelette de papier de Manille imbibée de composition jusqu'au trois quarts de sa hauteur suspendue à la verticale à l'aide d'une pince et d'un statif, à une flamme portée à une distance très proche du bout de papier de Manille imbibé.

Si la bandelette de papier s'enflamme en moins de trois secondes (ce qui est le cas d'une bandelette imprégnée d'acétonitrile pur), le mélange est dit hautement inflammable.

Si la bandelette de papier s'enflamme au bout de trois secondes et que cela est à nouveau le cas après réitération du test, le mélange est considéré comme étant inflammable.

Si la bandelette de papier ne s'enflamme pas au bout de trois secondes et que cela est à nouveau le cas après réitération du test, le mélange est considéré comme non inflammable.

En résumé, le protocole mis en oeuvre peut être représenté par le diagramme suivant :

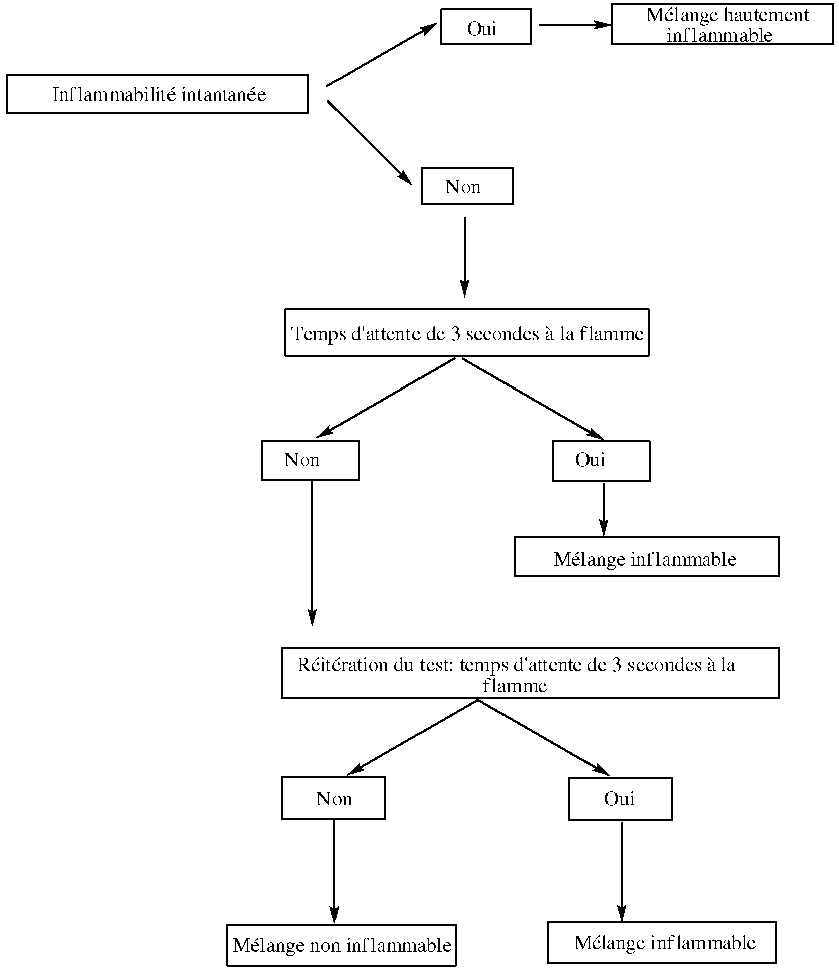

Le protocole ci-dessus a été mis en oeuvre avec différents mélanges comportant un pourcentage molaire de solvant x et un rapport molaire en solvant r (r étant déterminé par la relation r=x/(1-x)).

Les résultats figurent dans le tableau ci-dessous.

| | BMIM-BF4 | Py-BF4 | PTMA-TFSI | P14-TFSI | PiP14-TFSI |
|---|---|---|---|---|---|
| Acétonitrile | In* r≤4 | In* r≤6,69 | In* r≤4 | In* r≤2,33 | In* r≤2,33 |
| γ-butyrolactone | In* r≤1,2 | In* r≤1,5 | In* r≤1,2 | In* r≤1,5 | In* r≤2,33 |

| | | | | | |
|---|---|---|---|---|---|
| In*=Ininflammable | | | | | |

Il a été constaté que les mélanges à base d'acétonitrile ont une limite d'inflammabilité supérieure aux mélanges à base de γ-butyrolactone, alors que l'on aurait pu s'attendre à ce que les mélanges à base d'acétonitrile soient plus facilement inflammables que ceux à base de γ-butyrolactone (compte tenu que cette dernière est beaucoup moins volatile que l'acétonitrile). Par exemple, pour rendre inflammable un mélange à base de BMIM-BF4, il faut plus de 80% d'acétonitrile mais seulement 55% de γ-butyrolactone. Sans être lié par la théorie, ceci peut s'expliquer par le fait que la γ-butyrolactone étant une molécule plus encombrante que l'acétonitrile, elle présente moins d'interactions avec le cation organique (malgré un nombre donneur comparable). Il en résulte que la solvatation des ions des liquides ioniques est plus forte avec l'acétonitrile qu'avec la γ-butyrolactone, rendant ainsi le mélange avec l'acétonitrile moins inflammable. Ainsi, la quantité de solvant immobilisé dans la couche de solvatation des ions est importante avec l'acétonitrile.

Il a été procédé également à des mesures de voltampérométrie cyclique avec un supercondensateur comprenant comme électrolyte un mélange ternaire acétonitrile/PTMA-TFSI/Et₄N-BF₄ pour une vitesse de balayage de 10 mV/s à 25°C avec un appareil du type VMP Multi-Channel Potentiostat/Galvanostat de chez Biologic. Il en ressort que la capacité du supercondensateur n'est pas affectée par la présence du liquide ionique par rapport à des essais similaires avec, comme électrolyte, un mélange binaire acétonitrile/Et₄N-BF₄.

## Revendications

1. Utilisation d'un liquide ionique dans une composition électrolytique comprenant un solvant organique et un ou plusieurs sels ioniques non lithiés dissous dans ledit solvant organique pour augmenter la température d'inflammabilité de ladite composition.

2. Utilisation selon la revendication 1, dans laquelle le liquide ionique comprend un cation consistant en un composé comportant au moins un atome d'azote, dont la charge positive est portée par ledit atome d'azote, cet atome d'azote pouvant appartenir à une chaîne hydrocarbonée linéaire ou ramifiée ou à un cycle hydrocarboné.

3. Utilisation selon la revendication 2, dans laquelle, lorsque l'atome d'azote chargé appartient à une chaîne hydrocarbonée linéaire ou ramifiée, le cation répond à la formule générale suivante : 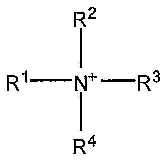 dans laquelle R¹, R², R³ et R⁴ représentent un groupe alkyle comprenant de 1 à 12 atomes de carbone.

4. Utilisation selon la revendication 3, dans laquelle le cation est le N-triméthyl-N-propylammonium, le N-hexyl-N-triméthylammonium, le N-éthyl-N-diméthyl-N-propylammonium ou le N-méthyl-N-trioctylammonium.

5. Utilisation selon la revendication 2, dans laquelle, lorsque l'atome d'azote chargé appartient à un cycle hydrocarboné, le cation répond à l'une des formules (II) et (III) suivantes : 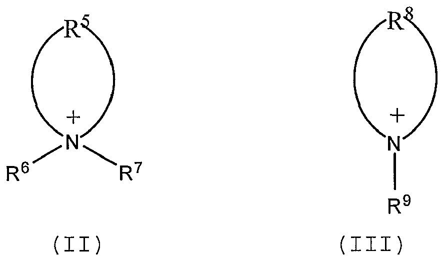 dans lesquelles :
- N⁺ et R⁵ forment ensemble un groupe alicyclique ;
- N⁺ et R⁸ forment ensemble un groupe aromatique ;
- R⁶, R⁷ et R⁹ représentent, indépendamment, un groupe alkyle comprenant de 1 à 12 atomes de carbone.

6. Utilisation selon la revendication 5, dans laquelle le cation de formule (II) est choisi parmi les cations pipéridinium et les cations pyrrolidinium.

7. Utilisation selon la revendication 5, dans laquelle le cation de formule (III) est choisi parmi les cations imidazolium et les cations pyridinium.

8. Utilisation selon l'une quelconque des revendications précédentes, dans laquelle le liquide ionique comprend un anion consistant en un composé comprenant un hétéroatome porteur d'une charge négative.

9. Utilisation selon la revendication 8, dans laquelle l'hétéroatome porteur d'une charge négative est un atome d'azote ou un atome de bore.

10. Utilisation selon la revendication 8 ou 9, dans laquelle l'anion est un composé amidure perfluoré.

11. Utilisation selon la revendication 8 ou 9, dans laquelle l'anion est un composé borate perfluoré.

12. Utilisation selon l'une quelconque des revendications précédentes, dans laquelle le liquide ionique est choisi parmi :
*le N-triméthyl-N-propylammonium bis(trifluométhanesulfonyl)imide répondant à la formule suivante : 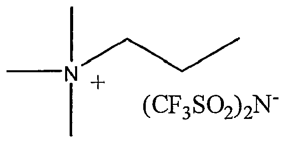
*le N-butyl-N-méthylpipéridinium bis(trifluorométhanesulfonyl)imide répondant à la formule suivante : 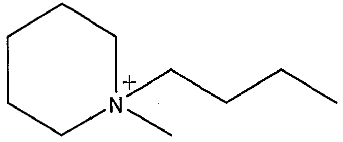 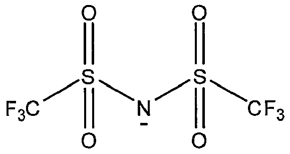
*le N-butyl-N-méthylpyrrolidinium bis(trifluométhanesulfonyl)imide répondant à la formule suivante : 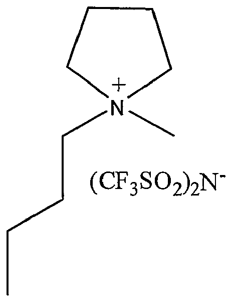
*le 1-n-butyl-3-méthylimidazolium tétrafluoroborate répondant à la formule suivante : 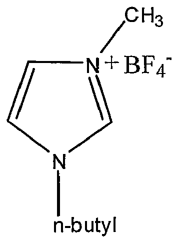
*le 1-n-butyl-4-méthylpyridinium tétrafluoroborate répondant à la formule suivante :

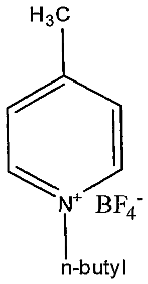

13. Utilisation selon l'une quelconque des revendications précédentes, dans laquelle le sel ionique non lithié est un sel d'ammonium.

14. Utilisation selon l'une quelconque des revendications précédentes, dans laquelle le solvant organique est un solvant organique aprotique.

15. Utilisation selon l'une quelconque des revendications précédentes, dans laquelle le solvant organique est choisi parmi les solvants nitriles, les solvants carbonates et les solvants lactones.

## Patentansprüche

1. Verwendung einer ionischen Flüssigkeit in einer elektrolytischen Zusammensetzung, umfassend ein organisches Lösungsmittel und ein oder mehrere nicht lithiumhaltige ionische Salze, die in dem organischen Lösungsmittel gelöst sind, um die Entflammungstemperatur der Zusammensetzung zu erhöhen.

2. Verwendung nach Anspruch 1, bei der die ionische Flüssigkeit ein Kation umfasst, bestehend aus einer Verbindung, die wenigstens ein Stickstoffatom umfasst, deren positive Ladung durch das Stickstoffatom getragen wird, wobei dieses Stickstoffatom zu einer linearen oder verzweigten Kohlenwasserstoffkette oder zu einem Kohlenwasserstoffkreis gehören kann.

3. Verwendung nach Anspruch 2, bei der, wenn das geladene Stickstoffatom zu einer linearen oder verzweigten Kohlenwasserstoffkette gehört, das Kation der nachfolgenden allgemeinen Formel genügt: 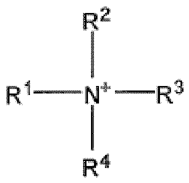 wobei R¹, R², R³ und R⁴ eine Alkylgruppe darstellen, die 1 bis 12 Kohlenstoffatome umfasst.

4. Verwendung nach Anspruch 3, bei der das Kation N-trimethyl-N-propylammonium, N-hexyl-N-trimethylammonium, N-ethyl-N-dimethyl-N-propylammonium oder N-methyl-N-trioctylammonium ist.

5. Verwendung nach Anspruch 2, bei der, wenn das geladene Stickstoffatom zu einem Kohlenwasserstoffkreis gehört, das Kation einer der nachfolgenden Formeln (II) und (III) genügt: 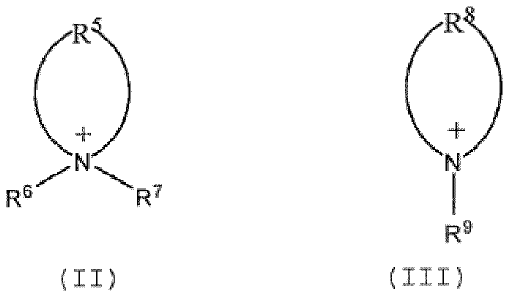 wobei:
- N⁺ und R⁵ gemeinsam eine alizyklische Gruppe bilden;
- N⁺ und R⁸ gemeinsam eine aromatische Gruppe bilden;
- R⁶, R⁷ und R⁹ unabhängig voneinander eine Alkylgruppe darstellen, die 1 bis 12 Kohlenstoffatome umfasst.

6. Verwendung nach Anspruch 5, bei der das Kation der Formel (II) ausgewählt ist aus den Piperidin-Kationen und den Pyrrolidin-Kationen.

7. Verwendung nach Anspruch 5, bei der das Kation der Formel (III) ausgewählt ist aus den Imidazol-Kationen und den Pyridin-Kationen.

8. Verwendung nach einem der vorhergehenden Ansprüche, bei der die ionische Flüssigkeit ein Anion umfasst, bestehend aus einer Verbindung, die ein Heteroatom umfasst, welches Träger einer negativen Ladung ist.

9. Verwendung nach Anspruch 8, bei der das Heteroatom, welches Träger einer negativen Ladung ist, ein Stickstoffatom oder ein Boratom ist.

10. Verwendung nach Anspruch 8 oder 9, bei der das Anion eine perfluorierte Amidverbindung ist.

11. Verwendung nach Anspruch 8 oder 9, bei der das Anion eine perfluorierte Boratverbindung ist.

12. Verwendung nach einem der vorhergehenden Ansprüche, bei der die ionische Flüssigkeit ausgewählt ist aus:
*N-trimethyl-N-propylammonium bis (trifluomethanesulfonyl) imid, das der nachfolgenden Formel genügt: 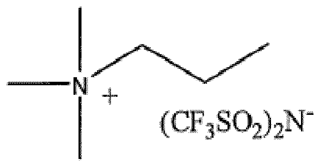
*N-butyl-N-methylpiperidin bis (trifluoromethanesulfonyl) imid, das der nachfolgenden Formel genügt: 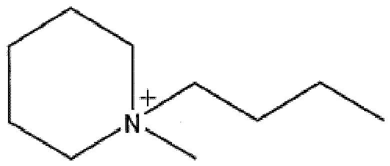 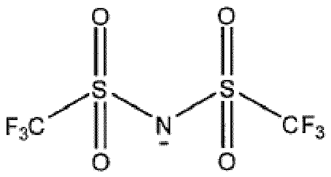
*N-butyl-N-methylpyrrolidin bis (trifluomethanesulfonyl) imid, das der nachfolgenden Formel genügt: 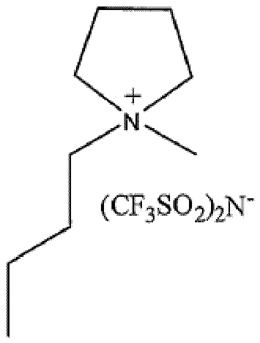
*1-n-butyl-3-methylimidazol tetrafluoroborat, das der nachfolgenden Formel genügt: 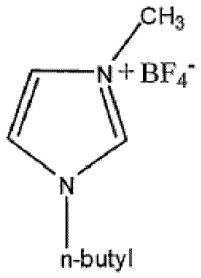
*1-n-butyl-4-methylpyridin tetrafluoroborat, das der nachfolgenden Formel genügt:

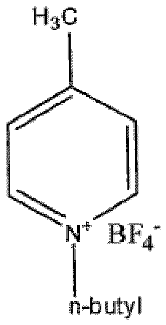

13. Verwendung nach einem der vorhergehenden Ansprüche, bei der das nicht lithiumhaltige ionische Salz ein Ammoniumsalz ist.

14. Verwendung nach einem der vorhergehenden Ansprüche, bei der das organische Lösungsmittel ein aprotisches organisches Lösungsmittel ist.

15. Verwendung nach einem der vorhergehenden Ansprüche, bei der das organische Lösungsmittel ausgewählt ist aus den Nitrillösungsmitteln, den Karbonatlösungsmitteln und den Laktonlösungsmitteln.

## Claims

1. Use of an ionic liquid in an electrolytic composition comprising an organic solvent and one or several non-lithiated ionic salts dissolved in said organic solvent to increase the flammability temperature of said composition.

2. Use according to claim 1, in which the ionic liquid cation contains a cation consisting of a compound comprising at least one nitrogen atom, for which the positive charge is carried by said nitrogen atom, this nitrogen atom possibly belonging to a linear or ramified hydrocarbon chain or to a hydrocarbon cycle.

3. Use according to claim 2, in which, when the charged nitrogen atom belongs to a linear or ramified hydrocarbon chain, the cation satisfies the following general formula: 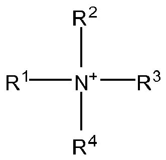 in which R¹, R², R³ and R⁴ represent an alkyl group comprising 1 to 12 carbon atoms.

4. Use according to claim 3, in which the cation is N-trimethyl-N-propylammonium, N-hexyl-N-trimethylammonium, N-ethyl-N-dimethyl-N-propylammonium or N-methyl-N-trioctylammonium.

5. Use according to claim 2, in which when the charged nitrogen atom belongs to a hydrocarbon cycle, the cation satisfies one of the following formulas (II) and (III): 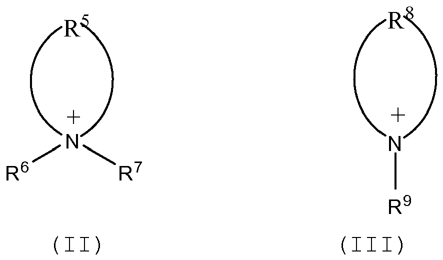 in which:
- N⁺ and R⁵ together form an alicyclic group;
- N⁺ and R⁸ together form an aromatic group;
- R⁶, R⁷ and R⁹ independently represent an alkyl group containing 1 to 12 carbon atoms.

6. Use according to claim 5, in which the cation with formula (II) is chosen from among piperidinium cations and pyrrolidinium cations.

7. Use according to claim 5, in which the cation with formula (III) is chosen from among imidazolium cations and pyridinium cations.

8. Use according to any one of the previous claims, in which the ionic liquid contains an anion consisting of a compound comprising a heteroatom carrying a negative charge.

9. Use according to claim 8, in which the heteroatom carrying a negative charge is a nitrogen atom or a boron atom.

10. Use according to claim 8 or 9, in which the anion is a perfluorated amidide compound.

11. Use according to claim 8 or 9, in which the anion is a perfluorated borate compound.

12. Use according to any one of the previous claims, in which the ionic liquid is chosen from among:
*N-trimethyl-N-propylammonium bis(trifluomethanesulfonyl)imide satisfying the following formula: 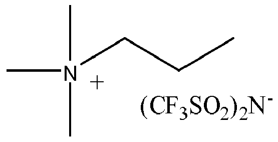
*N-butyl-N-methylpiperidinium bis(trifluoromethanesulfonyl)imide satisfying the following formula: 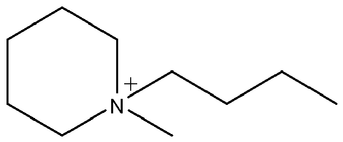 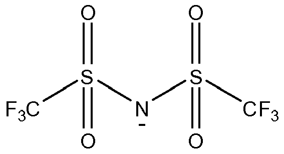
*N-butyl-N-methylpyrrolidinium bis(trifluomethanesulfonyl)imide satisfying the following formula: 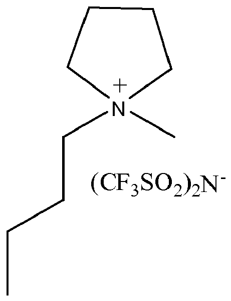
*1-n-butyl-3-methylimidazolium tetrafluoroborate satisfying the following formula: 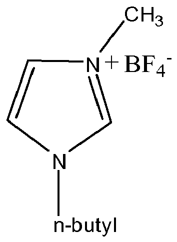
*1-n-butyl-4-methylpyridinium tetrafluoroborate satisfying the following formula:

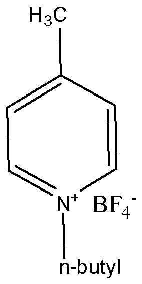

13. Use according to any one of the previous claims in which the non-lithiated ionic salt is an ammonium salt.

14. Use according to any one of the previous claims, in which the organic solvent is an aprotic organic solvent.

15. Use according to any one of the previous claims, in which the organic solvent is chosen from among nitrile solvents, carbonate solvents and lactone solvents.
